(19) Europäisches Patentamt
European Patent Office
Office européen des brevets

(11) Veröffentlichungsnummer: **0 013 564**
**A1**

(12) # EUROPÄISCHE PATENTANMELDUNG

(21) Anmeldenummer: **80100065.4**

(22) Anmeldetag: **07.01.80**

(51) Int. Cl.³: **C 08 G 63/68**
D 06 P 1/52

(30) Priorität: **10.01.79 DE 2900686**

(43) Veröffentlichungstag der Anmeldung:
**23.07.80 Patentblatt 80/15**

(84) Benannte Vertragsstaaten:
**AT BE CH DE FR GB IT NL**

(71) Anmelder: **CASSELLA Aktiengesellschaft**
**Hanauer Landstrasse 526**
**D-6000 Frankfurt am Main 61(DE)**

(72) Erfinder: **Engelhardt, Friedrich, Dr.**
**Hünfelder Strasse 18**
**D-6000 Frankfurt am Main 61(DE)**

(72) Erfinder: **Hintermeier, Karl, Dr.**
**Hünfelder Strasse 20**
**D-6000 Frankfurt am Main 61(DE)**

(72) Erfinder: **Ribka, Joachim, Dr.**
**Rügener Strasse 4**
**D-6050 Offenbach am Main(DE)**

(72) Erfinder: **Dürch, Walter, Dr.**
**In der Braubach 4**
**D-6240 Königstein 4(DE)**

(72) Erfinder: **Rupp, Walter, Dr.**
**Am Eichkopf 6**
**D-6240 Königstein 4(DE)**

(74) Vertreter: **Urbach, Hans-Georg, Dr. et al,**
**Hanauer Landstrasse 526**
**D-6000 Frankfurt am Main 61(DE)**

(54) **In Wasser löslicher oder dispergierbarer Polyester, Verfahren zu seiner Herstellung und seine Verwendung als Egalisierhilfsmittel, Egalisierhilfsmittel und Verfahren zum gleichmässigen Färben.**

(57) Der in Wasser lösliche oder dispergierbare Polyester enthält Phosphonsäureestergruppen der allgemeinen Formel

$$- O - \overset{R}{\underset{O}{P}} - O -$$

worin R = Wasserstoff, einen aliphatischen, cycloaliphatischen, aromatischen oder araliphatischen Rest bedeutet, und besitzt ein scheinbares mittleres Molekulargewicht von 800 bis 5000. Er wird dadurch hergestellt, daß 100 Mol% zweibasischer, für die Polyesterherstellung geeigneter

a) Dicarbonsäuren und/oder ihrer Derivate und/oder

b) Phosphonsäuren und/oder ihrer Derivate und 80 bis 140 Mol% für die Polyesterherstellung geeigneter

a) Dialkohole, äthergruppenhaltiger Dialkohole und/oder

b) Di-Ester von Phosphonsäuren und/oder Polyphosphonsäuren mit Dialkoholen, wobei die 180 bis 240 Mol% Ausgangskomponenten 5 bis 100 Mol% Phosphonsäuregruppen und/oder Phosphonsäureestergruppen enthalten, in an sich bekannter Weise bis zu einem scheinbaren mittleren Molekulargewicht von 800 bis 5000 kondensiert werden, wobei anstelle von einem Molekül zweibasischer Säure und einem Molekül Dialkohol auch zwei Moleküle Hydroxysäure eingesetzt werden können. Er wird als Egalisierhilfsmittel zum Färben von Synthesefasern und zur Herstellung von Egalisiermitteln verwendet.

EP 0 013 564 A1

Ref. 3133 Dr.Eu/Ll

In Wasser löslicher oder dispergierbarer Polyester, Verfahren zu seiner Herstellung und seine Verwendung als Egalisierhilfsmittel, Egalisierhilfsmittel und Verfahren zum gleichmäßigen Färben

Es ist bereits bekannt, in Wasser lösliche Polymischester herzustellen, die ihre Löslichkeit vor allem einem Gehalt von mehr als 10 Mol% an sulfogruppenhaltigen Bausteinen, wie z.B. Sulfodicarbonsäuren, verdanken (vgl. z.B. DE-PS 2 438 379). Diese Sulfomonomere sind jedoch alle entweder schlecht zugänglich, teuer oder thermisch instabil. So wird z.B. der 5-Natrium-sulfopropoxyisophthalsäuredimethylester durch Addition des krebserregenden Propansultons an den schlecht zugänglichen und teueren 5-Hydroxyisophthalsäuredimethylester hergestellt. Die preisgünstige Sulfobernsteinsäure und ihre Ester andererseits sind thermisch nicht stabil und spalten bei Kondensationstemperaturen über 180°C Schwefeldioxid ab. Noch ungünstiger ist die Situation bei sulfogruppenhaltigen Diolen.

Die Erfindung betrifft einen in Wasser löslichen oder dispergierbaren Polyester, der dadurch gekennzeichnet ist, daß er Phosphonsäureester-Gruppen enthält. Außerdem betrifft die Erfindung ein Verfahren zur Herstellung des Phosphonsäureester-Gruppen enthaltenden Polyesters und seine Verwendung als Egalisierhilfsmittel, sowie die unter Verwendung des erfindungsgemäßen Polyesters hergestellten Egalisierhilfsmittel und Verfahren zum gleichmäßigen Färben.

Der erfindungsgemäße Polyester besitzt insbesondere ein scheinbares mittleres Molekulargewicht von 800 bis 5000

vorzugsweise von 1500 bis 3000, gemessen im Dampfdruckosmometer mit Dimethylformamid als Lösungsmittel und enthält als Phosphonsäureester-Gruppen, insbesondere solche der allgemeinen Formel

$$\begin{array}{c} R \\ | \\ -O-P-O- \\ \| \\ O \end{array} \qquad I$$

worin R = Wasserstoff, einen aliphatischen, cycloaliphatischen, aromatischen oder araliphatischen Rest bedeutet und der aliphatische Rest sowie aliphatische Teil des araliphatischen Rests auch durch Sauerstoff ein oder mehrfach unter brochen sein kann. Insbesondere bedeutet R = Wasserstoff, einen aliphatischen Rest mit 1 bis 22 C-Atomen, der auch durch Sauerstoff ein- oder mehrfach unterbrochen sein kann, einen cycloaliphatischen Rest mit 5 bis 8 C-Atomen, Phenyl, Naphthyl, wobei der Phenyl- oder Naphthylrest auch durch bis zu 3 Alkylresten mit je 1 bis 6 C-Atomen substituiert sein kann, einen durch Phenyl substituierten aliphatischen Rest mit 1 bis 12 C-Atomen im aliphatischen Rest, der auch durch Sauerstoff ein- oder mehrfach unterbrochen sein kann.

Der erfindungsgemäße Polyester kann dadurch hergestellt werden, daß 100 Mol% zweibasischer, für die Polyesterherstellung geeigneter Säuren und/oder deren Derivate, insbesondere deren Ester, Säurehalogenide oder Anhydride mit 80 bis 140 Mol%, vorzugsweise 90 bis 130 Mol% Dialkoholen oder deren Ester mit niederen Carbonsäuren in an sich bekannter Weise bis zu einem scheinbaren mittleren Molekulargewicht von 800 bis 5000, vorzugsweise 1500 bis 3000, kondensiert werden und die Ausgangskomponenten so ausgewählt werden, daß sie, bezogen auf die Summe der Kettenglieder, 2,5 bis 50 %, vorzugsweise 5 bis 30 %, Phosphonsäuregruppen und/oder Phosphonsäureester-Gruppen enthalten.

Geeignete Disäuren (A) für die Herstellung des erfindungsgemäßen Polyesters sind:

A) a) aromatische, araliphatische, cycloaliphatische

und aliphatische Dicarbonsäuren
b) aliphatische, cycloaliphatische, araliphatische und aromatische Phosphonsäuren
bzw. Derivate von A a) und A b), insbesondere deren Ester, Säurehalogenide oder Anhydride sowie
Gemische dieser Substanzen. Für die unter Aa) genannten Dicarbonsäuren kommen alle zur Polyesterherstellung brauchbaren Dicarbonsäuren der Formel

$$HO-\overset{O}{\overset{\|}{C}}-R^1-\overset{O}{\overset{\|}{C}}-OH \qquad II$$

bzw. deren entsprechende Säurehalogenide, Anhydride oder Ester in Betracht, die in den fertigen Polyestern das Kettenglied

$$-\overset{C}{\overset{\|}{C}}-R^1-\overset{O}{\overset{\|}{C}}- \qquad III$$

einbauen, wobei $R^1$ eine direkte Bindung oder einen divalenten aliphatischen, cycloaliphatischen, aromatischen oder araliphatischen Rest darstellt. Vorzugsweise bedeutet $R^1$ einen divalenten aliphatischen Rest mit 2 bis 10 C-Atomen, einen divalenten cycloaliphatischen Rest mit 6 bis 8 C-Atomen, einen divalenten aromatischen Rest mit 6 bis 12 C-Atomen oder einen araliphatischen Rest mit 6 bis 14 C-Atomen. Beispiele für geeignete aliphatische, cycloaliphatische, aromatische und araliphatische Dicarbonsäuren sind: Oxal-, Malon-, Bernstein-, Methylmalon-, Glutar-, Dimethylmalon-, Adipin-, Pimelin-, Kork-, 2,2-Dimethylglutar-, Azelain-, Trimethyladipin-, Sebacin-, Fumar-, Malein-, Itacon-, Citracon-, Mesacon-, Traumatin-, Mucon-, 1,2-Cyclohexan-dicarbon-, 1,3-Cyclohexan-dicarbon-, 1,4-Cyclohexan-dicarbon-, Norbonandicarbon-, Phthal-, Isophthal-, Terephthal-, 1,4-Naphthalin-dicarbon-, 2,5-Naphthalin-dicarbon-, Diphen-säure und Säuren der allgemeinen Formel

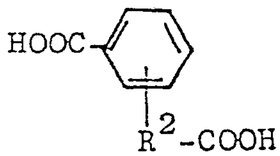

IV

wobei $R^2$ ein in ortho, meta oder para stehender Alkylenrest mit 2 bis 4 C-Atomen bedeutet, z. B. 4-Carboxyphenylessigsäure, 3- bzw. 4-Carboxyhydrozimtsäure, 2- bzw. 4-Carboxy-γ-phenylbuttersäure. Bevorzugt sind die aromatischen Dicarbonsäuren, Isophthal- und Terephthalsäure wegen ihrer schweren Verseifbarkeit.

Das Kohlenstoffgerüst der in Betracht kommenden Dicarbonsäuren kann auch durch Heteroatome,wie Sauerstoff oder Schwefel oder Heterogruppen, wie $-SO_2-$, unterbrochen sein. Beispiele hierfür sind Diglykolsäure , Thiodiglykolsäure, Thiodipropionsäure, 4,4'-Oxydibenzoesäure, 4,4'-Sulfonyldibenzoesäure und

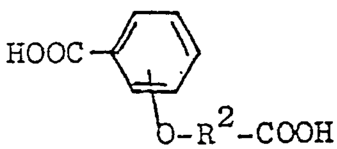

V

wobei $R^2$ einen Alkylenrest mit 2 bis 4 C-Atomen bedeutet und die Seitenkette in ortho-, meta- oder para-Stellung zur Carboxylgruppe des Kerns stehen kann.

Die genannten Dicarbonsäuren können, wie bereits erwähnt, auch in Form ihrer Derivate, insbesondere in Form ihrer Ester, Anhydride oder Säurehalogenide eingesetzt werden. Als Säurehalogenide werden die Säurechloride bevorzugt. Als Ester kommen Mono- oder Diester mit niederen, d.h. leicht abdestillierbaren Monoalkoholen, also vorzugsweise solche mit 1 bis 4 Kohlenstoffatomen, aber auch solche mit den noch zu nennenden Dialkoholen in Betracht. Geeignete Ester, Anhydride und Säurechloride sind zum Beispiel: Dimethyl-, Diäthyl-, Di-n-propyl-, Di-isopropyl- und Di-n-butylester der Terephthalsäure; Dimethyl-, Diäthyl-, Di-n-propyl-, Di-n-butyl-, Di-isobutylester der Isophthalsäure, Dimethyl-, Diäthyl-, Di-n-propyl-, Di-isopropyl-, Di-n-butylester der Phthalsäure; Malonsäure-dimethyl-, -diäthyl-, -di-n-propyl- oder

-di-n-butylester; Bernsteinsäure-dimethyl- oder -di-n-butylester; Glutarsäure-diäthyl- oder -di-isopropylester; Adipinsäure-diäthyl- oder -di-isobutylester; Pimelinsäuredimethyl-, -di-isopropyl- oder -di-n-butylester; Maleinsäure-dimethyl-, -di-isopropyl- oder -di-n-butylester; Korksäure-dimethyl, -diäthyl-, -di-n-propyl- oder -di-n-butylester; 1,4-Cyclohexan-dicarbonsäure-dimethyl-, -diäthyl-, -di-n-propyl-, -di-n-butylester; 1,2-Cyclohexan-dicarbonsäure-dimethyl-, -diäthyl-, -di-n-propyl-, -di-n-butylester; 1,3-Cyclohexan-dicarbonsäure-dimethyl-, -diäthyl-, -di-n-propyl-, -di-n-butylester; Phthalsäureanhydrid, Maleinsäure-anhydrid, Bernsteinsäure-anhydrid, Phthalylchlorid.

Die vorstehend unter A b) genannten Phosphonsäuren besitzen die allgemeine Formel

$$HO-\overset{\overset{\large R}{|}}{\underset{\underset{\large O}{\|}}{P}}-OH \qquad \text{VI}$$

und führen die Phosphonsäureester-Gruppierung VII und das Kettenglied VIIa

$$-O-\overset{\overset{\large R}{|}}{\underset{\underset{\large O}{\|}}{P}}-O- \quad (VII) \qquad\qquad -\overset{\overset{\large R}{|}}{\underset{\underset{\large O}{\|}}{P}}- \qquad \text{VIIa}$$

in den Polyester ein. R hat dabei die bereits genannte Bedeutung.

Beispiele für geeignete Phosphonsäuren sind: Methan-, Äthan-, n-Propan-, i-Propan-, n-Butan-, n-Buten-2-, i-Butan-, n-Octan-, i-Octan-, Decan-, Dodecan, Octadecan-, Nonadecan-, Docosan-phosphonsäure, Cyclopentan-, Cyclohexan-, Benzol-, α-Naphthalin-, β-Naphthalin-phosphonsäure, 3-Oxapentan-phosphonsäure, 4-Oxaheptan-, 4,8-Dioxaundecan-phosphonsäure, Phosphonsäuren der allgemeinen Formel

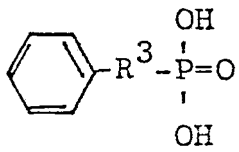

VIII

wobei $R^3$ ein Alkylenrest mit 1 bis 12 C-Atomen bedeutet, der auch durch Sauerstoff ein- oder mehrfach unterbrochen sein kann, z.B. Benzyl-, Phenäthyl-phosphonsäure, $C_6H_5CH_2OCH_2CH_2PO(OH)_2$; $C_6H_5CH_2CH_2OCH_2CH_2OCH_2CH_2PO(OH)_2$.

Die genannten Phosphonsäuren können, wie bereits erwähnt, auch in Form ihrer Derivate, insbesondere in Form ihrer Mono- oder Di-Ester mit niederen, d.h. leicht abdestillierbaren Monoalkoholen, vorzugsweise solchen mit 1 bis 4 C-Atomen oder den noch zu nennenden Dialkoholen oder in Form ihrer Halogenide, insbesondere Chloride oder in Form ihrer Anhydride verwendet werden. Die phosphorige Säure wird zweckmäßigerweise nur in Form ihrer Ester, insbesondere ihrer Ester mit Alkoholen mit 1 bis 4 C-Atomen, z.B. als Diäthylphosphit, eingesetzt.

Im Rahmen der Erfindung sind geeignete Dialkohole (B):
B) a) aliphatische, cycloaliphatische, araliphatische Diole, worunter auch äthergruppenhaltige aliphatische, cycloaliphatische Diole, sowie äthergruppenhaltige aliphatische, cycloaliphatische Diole mit einem aromatischen Ringsystem im Molekül bzw. deren Acylderivate mit leichtflüchtigen, niederen Carbonsäuren ($C_1$ bis $C_4$) zu verstehen sind,
b) Di-Ester von Phosphonsäuren oder Polyphosphonsäuren mit Dialkoholen bzw. Gemische aus Dialkoholen B a) und/oder Bb).

Die unter B a) genannten Diole besitzen die Formel

$HO-R^4-OH$ IX

und bauen in den fertigen Polyestern Kettenglieder

$-O-R^4-O-$ X

ein, wobei $R^4$ ein divalenter aliphatischer, cycloaliphatischer oder araliphatischer Rest darstellt. Insbesondere

bedeutet $R^4$ einen divalenten aliphatischen Rest mit 2 bis 6 C-Atomen, vor allem einen divalenten aliphatischen Rest mit Ätherbrücken, der auch noch durch einen aromatischen Kern unterbrochen sein kann. Bei den durch Ätherbrücken und/oder aromatischen Kernen (insbesondere einem Phenylen- oder Naphthylen-Kern) unterbrochenen aliphatischen Resten bezieht sich der angegebene bevorzugte Bereich von 2 bis 6 C-Atomen lediglich auf ein aliphatisches Teilglied zwischen zwei Ätherbrücken bzw. Sauerstoffatomen oder aromatischen Kernen. Der divalente aliphatische Rest mit Ätherbrücken kann z.B. ein Molekulargewicht bis 10 000 und gegebenenfalls noch höher besitzen und kann sich beispielsweise von einem Polyäthylenglykol, einem Äthylenpropylen-polyglykol oder einem Polypropylenglykol ableiten. Insbesondere bedeutet $R^4$ auch einen divalenten cycloaliphatischen Rest mit 5 bis 10 Kohlenstoffatomen oder einen divalenten araliphatischen Rest mit 8 bis 14 Kohlenstoffatomen.

Beispiele für geeignete Diole sind: Äthylenglykol; Propandiol-1,2 und Propandiol-1,3 (Trimethylenglykol); Butandiole, insbesondere Butandiol-1,4; Pentandiole, wie Pentandiol-1,5; Hexandiole, insbesondere Hexandiol-1,6; Decandiol-1,10; Diäthylenglykol, Äthylenpropylenglykol-1,2; Äthylenpropylenglykol-1,3; Dipropylenglykol; Triäthylenglykol, Tetraäthylenglykol; Tripropylenglykol; Polyäthylenglykol bis zu einem Molekulargewicht von 10000; Polypropylenglykol bis zu einem Molekulargewicht von 10 000 oder höher; Polyäthylen-polypropylen-mischglykole (sog. "Pluronics") bis zu einem Molekulargewicht von 10 000 oder höher; Bis-(4-hydroxybutyl)-äther; 2,4-Dimethyl-2-äthyl-hexan-diol-1,3; 2-Äthyl-2-butyl-propandiol-1,3; 2,2-Dimethyl-propandiol-1,3; 2-Äthyl-2-isobutyl-propandiol-1,3; 2,2,4-Trimethylhexandiol-1,6; 1,3-Dihydroxy-cyclohexan; 1,4-Dihydroxycyclohexan (Chinit) ; 1,4-Bis(hydroxymethyl)cyclohexan; 1,3-Bis(hydroxymethyl)cyclohexan; 1,2-Bis(hydroxymethyl)-cyclohexan, 1,4-Bis(hydroxymethyl)benzol, 1,3-Bis(hydroxymethyl)benzol; 1,2-Bis(hydroxymethyl)benzol; 2,6-Bis-(hydroxymethyl)naphthalin.

Ferner sind als Diole beispielsweise Diphenole geeignet, die durch beiderseitige Umsetzung mit Äthylenoxid in araliphatische Bishydroxyverbindungen übergeführt worden sind und denen z.B. die allgemeine Formel

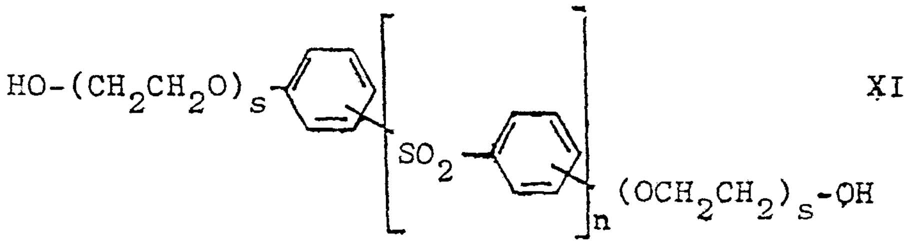
XI

worin n = 0 oder 1, s = 1 bis 20, und die Bindungen an den Benzolkernen in ortho-, meta- oder para-Stellung stehen können, oder die allgemeine Formel

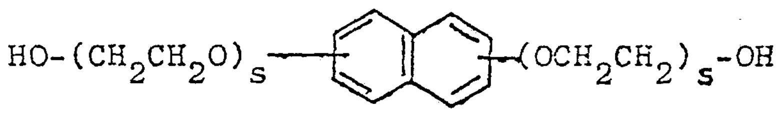
XII

worin s = 1 bis 20 ist, zugeordnet werden kann. Bei geeigneten Vertretern der allgemeinen Formel XI ist z.B. n = 0 und s = 1; n = 1 und s = 1; n = 0 und s = 2; n = 1 und s = 2.

Die Vertreter der für B, a) genannten Diole können auch als Ester mit leichtflüchtigen Carbonsäuren, wie z.B. Ameisen-, Essig- oder Propionsäure, eingesetzt werden.

Die unter B, b) genannten Di-Ester von Phosphonsäuren oder Polyphosphonsäuren mit Diolen besitzen insbesondere folgende allgemeine Formeln

$$HO-(CHR^5-CHR^6-O)_s-\underset{\overset{\parallel}{O}}{\overset{\overset{R}{|}}{P}}-(O-CHR^5-CHR^6)_z-OH \qquad XIII$$

$$HO-(CHR^5-CHR^6-O)_q-\underset{\overset{\parallel}{O}}{\overset{\overset{R}{|}}{P}}-(OCHR^5-CHR^6O-\underset{\overset{\parallel}{O}}{\overset{\overset{R}{|}}{P}}-)_p-(OCHR^5-CHR^6)_k-OH \qquad XIV$$

und bauen in den fertigen Polyester die Kettenglieder

$$-O-(CHR^5-CHR^6-O)_s-\underset{O}{\overset{R}{P}}-(O-CHR^5-CHR^6)_z-O- \qquad XIIIa$$

$$-O-(CHR^5-CHR^6-O)_q-\underset{O}{\overset{R}{P}}-(OCHR^5-CHR^6O-\underset{O}{\overset{R}{P}}-)_p-(OCHR^5-CHR^6)_k-O- \qquad XIVa$$

ein, worin R die bereits genannte Bedeutung hat und $R^5$, $R^6$ = H, $-CH_3$ oder $-C_2H_5$, p = 1 bis 10, s und z = 1 bis 20, q und k = 0, 1, 2 oder 3 bedeuten. Die Verbindungen der allgemeinen Formeln XIII und/oder XIV werden zweckmäßigerweise als Gemische eingesetzt. Auch diese Verbindungen können als Ester mit leichtflüchtigen Carbonsäuren eingesetzt werden.

Um eine ausreichende Wasserlöslichkeit des fertigen Polyesters sicherzustellen, werden die Dialkohole der Gruppe B so ausgewählt, daß mindestens die Hälfte ihrer eingesetzten Molmenge aus wasserlöslichen, äthergruppenhaltigen Vertretern besteht, die in den fertigen Polyester die Gruppierung

$-OCH_2CH_2-(OCH_2CH_2)_r-O-$ oder $-O\underset{CH_3}{CH}CH_2-(O\underset{CH_3}{CH}CH_2)_t-O-$

oder $-OCH_2CH_2O\underset{CH_3}{CH}CH_2-(OCH_2CH_2O\underset{CH_3}{CH}CH_2)_u-O-$

oder $(OCH_2CH_2)_w-(O\underset{CH_3}{CH}CH_2)_x-(OCH_2CH_2)_y-O-$

einbauen, wobei r eine Zahl von 1 bis 230, t eine Zahl von 1 bis 175 und u eine Zahl von 1 bis 100 bedeutet. w, x, y sind Zahlen gleich oder größer als 1 und so groß, daß die Gruppierung ein Molgewicht von bis zu 10000 erreicht. Die vorgenannten Gruppierungen werden insbesondere von Diäthylenglykol (r = 1), Triäthylenglykol (r = 2), Polyäthylenglykolen (r = 4 bis 230), Dipropylenglykol (t = 1) und Äthylen-propylen-polyglykol (u = 1 bis 100) oder von Verbindungen mit einem Molgewicht bis 10000 eingebaut, die durch Umsetzung von Polypropylenglykol mit Äthylenoxid entstehen und die deshalb in der Regel mindestens die Hälfte der eingesetzten Molmenge der Verbindungen der Gruppe B stellen. Diäthylenglykol und Dipropylenglykol werden bevorzugt.

Anstelle von je einem Molekül einer Dicarbonsäure der Gruppe A und je einem Molekül eines Dialkohols der Gruppe B können auch zwei Moleküle einer Hydroxysäure (C) oder deren Derivate, insbesondere deren Ester mit niederen Monoalkoholen oder Diolen oder deren innere Ester verwendet werden. Als derartige Hydroxysäuren (C) können a) Hydroxycarbonsäuren und b) Hydroxyphosphonsäuren oder Mischungen von beiden verwendet werden.

Hydroxycarbonsäuren der Formel

$$HO-R^7-COOH \qquad XV$$

bauen in den fertigen Polyester das Kettenglied

$$-O-R^7-CO- \qquad XVI$$

ein, wobei $R^7$ einen divalenten aliphatischen, cycloaliphatischen oder araliphatischen Rest darstellt. Insbesondere bedeutet $R^7$ einen divalenten aliphatischen Rest mit 1 bis 10 Kohlenstoffatomen, einen divalenten cycloaliphatischen Rest mit 6 bis 11 Kohlenstoffatomen, einen divalenten araliphatischen Rest mit 8 bis 12 Kohlenstoffatomen, wobei bei dem araliphatischen Rest der aliphatische Teil vom

aromatischen Teil auch durch ein Heteroatom getrennt und/ oder der aliphatische Teil auch durch ein oder mehrere Heteroatome unterbrochen sein kann. Als Heteroatom kommt insbesondere Sauerstoff in Betracht. Beispiele für geeignete Hydroxycarbonsäuren sind Glykolsäure, Milchsäure, 3-Hydroxypropionsäure, 4-Hydroxybuttersäure, 5-Hydroxypentansäure, 5-Hydroxypentan-3-säure, Mandelsäure, 3-Hydroxymethyl-cyclohexan-carbonsäure, 4-Hydroxymethyl-cyclohexan-carbonsäure, 6-Hydroxymethyl-decalin-carbonsäure-(2), meta- und para-Hydroxyäthoxy-benzoesäure als Vertreter von Verbindungen der allgemeinen Formel

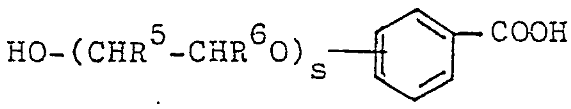

XVII,

wobei $R^5$, $R^6$ und s die bereits genannten Bedeutungen besitzen. Weitere geeignete Hydroxycarbonsäuren besitzen die allgemeine Formel

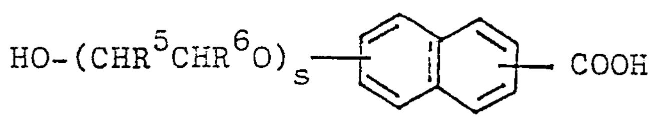

XVIII

Als Beispiele für geeignete Ester von Hydroxycarbonsäuren sind zu nennen: Milchsäure-methyl-ester, Milchsäure-äthylester, 4-Hydroxybuttersäure-methylester, Mandelsäure-äthylester, para-Hydroxyäthoxy-benzoesäuremethylester. Beispiele für geeignete innere Ester von Hydroxycarbonsäuren sind Butyrolacton und Valerolacton.

Als Hydroxyphosphonsäure werden im Rahmen der vorliegenden Erfindung, insbesondere Verbindungen der allgemeinen Formeln

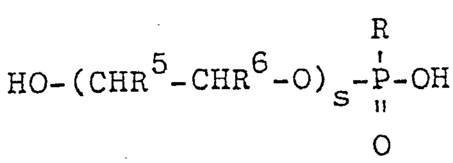

bzw.

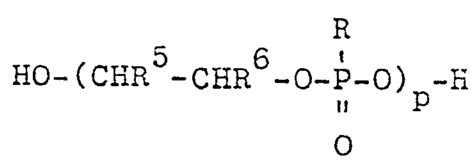

XIX

XX

verstanden, die in den Polyester Kettenglieder der allgemeinen Formeln

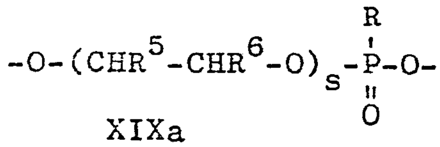
XIXa

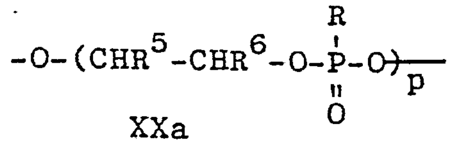
XXa

einbauen, wobei R, $R^5$, $R^6$ die bereits genannten Bedeutungen besitzen und s = 1 bis 20 und p = 1 bis 10 bedeuten. Geeignete innere Ester von Hydroxyphosphonsäure sind 2-Oxo-1,3,2-dioxaphospholane der allgemeinen Formel

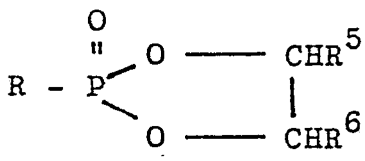
XXI

worin R, $R^5$ und $R^6$ die bereits genannten Bedeutungen besitzen. Geeignete Vertreter derartiger Hydroxyphosphonsäuren und Phospholane sind z.B.

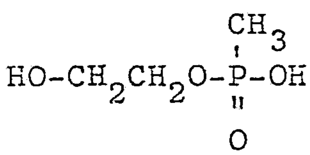
,
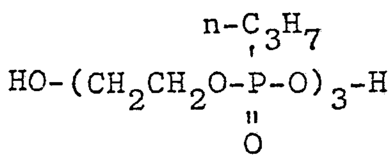
,
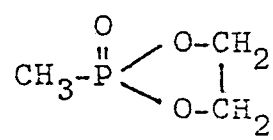

Beim Einsatz von Hydroxysäuren C wird die halbe Molmenge den Disäuren der Gruppe A und die andere halbe Molmenge den Dialkoholen der Gruppe B zugerechnet. Bei derVerwendung von z.B. m Mol% von Verbindungen der allgemeinen Formeln XIV und/oder XX, bei denen p größer als 1 ist, werden m·p Mol% Phosphonsäureester-Gruppen in den Polyester eingebaut.

Aus den für die Verbindungsklassen A, B und C angegebenen Verbindungen baut sich der fertige Polyester z.B. schematisch in einem Abschnitt des Moleküls wie folgt auf:

- A - B - A - C - C - A - B -

wobei -A-, -B-, -C- für ein Kettenglied steht, das aus einer unter den Klassen A, B und C genannten Verbindungen durch Kondensation resultiert. Bezogen auf die Summe der Kettenglieder (= 100 %), enthält der Polyester 2,5 bis 50%,

vorzugsweise 5 bis 30 % Phosphonsäureester-Gruppen. Denkbar ist auch, daß Phosphonsäureester-Gruppen an den Enden des Polyesters, d.h. in Form von Phosphonsäurehalbester-Gruppen vorhanden sind.

Zur Herstellung des Polyesters können anstelle der monomeren Bausteine A, B oder C natürlich auch niedrige Vorkondensate oder Oligomere aus den vorgenannten Bausteinen eingesetzt werden, wie z.B.

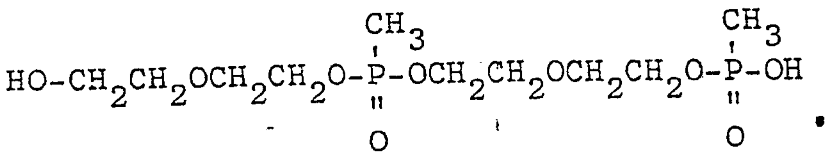

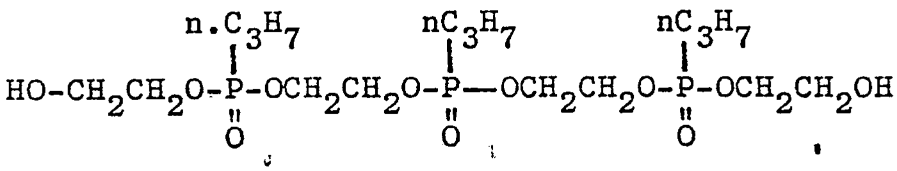

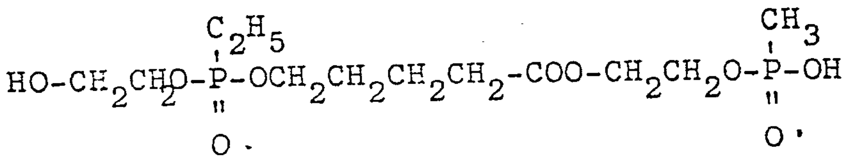

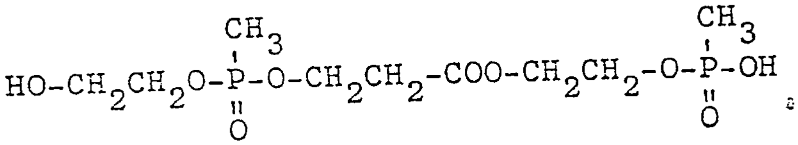

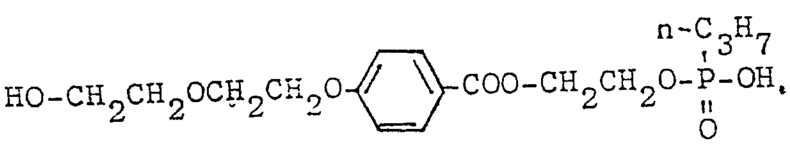

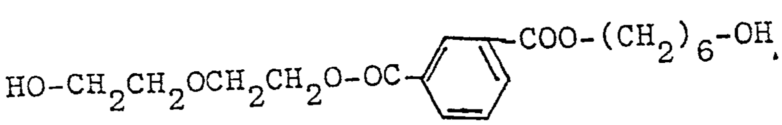

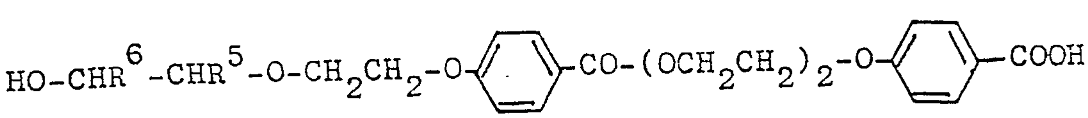

wobei $R^6$ und $R^5$ die bereits genannten Bedeutungen besitzen.

Die phosphonsäuregruppenhaltigen bzw. phosphonsäureestergruppenhaltigen Ausgangsprodukte sind leicht zugänglich und sind zum Teil preiswerte Handelsprodukte (z.B. der Hoechst AG, Deutschland), sie können, wie auch die anderen Ausgangsprodukte, leicht nach den für die jeweilige Verbindungsklasse bekannten Verfahren hergestellt werden. Die Herstellung von Verbindungen der allgemeinen Formeln XIV, XV, XVIII und XIX ist in der DE-OS 27 26 478 beschrieben.

Die Herstellung des erfindungsgemäßen Polyesters durch Kondensation der Ausgangskomponenten wird, wie üblich, bei erhöhter Temperatur von 100 bis 280°C, insbesondere 150 bis 230°C, vorzugsweise unter einer Atmosphäre eines inerten Gases, wie z.B. Stickstoff oder Kohlendioxid, und/oder unter vermindertem Druck und zweckmäßigerweise unter Rühren durchgeführt, wobei die flüchtigen Kondensationsprodukte (Wasser und/oder Alkohole), sowie gegebenenfalls überschüssige Ausgangskomponenten, meistens ein Diol, abdestilliert werden. Bei Anwendung von Normaldruck kann es zweckmäßig sein, gegen Ende der Kondensation ein Vakuum von z.B. 10 bis 30 mbar und gegebenenfalls danach noch ein solches von ca. 1 bis 3 mbar oder gegebenenfalls noch darunter anzulegen, um die flüchtigen Produkte weitgehend zu entfernen. Die Kondensation dauert normalerweise 3 bis 20 Stunden und wird soweit geführt, bis das gewünschte scheinbare mittlere Molekulargewicht von 800 bis 5000, vorzugsweise 1500 bis 3000, erreicht ist. Die für die Kondensation verwendeten Ausgangsmaterialien können alle zunächst gemischt und dann gemeinsam kondensiert werden. Bei diesem Vorgehen liegen im Produkt die Bausteine in statistischer Verteilung vor. Die erfindungsgemäßen Produkte können aber auch dadurch erhalten werden, daß zunächst nur ein Teil der Ausgangsmaterialien vorkondensiert wird und der Rest dann anschließend in beliebiger Reihenfolge und in beliebigem zeitlichen Abstand mit dem Vorkondensat weiterkondensiert wird. Abgesehen von stets möglichen Umesterungsvorgängen können auf diesem Wege bei gleichen Ausgangsmaterialien Produkte mit verschiedener Verteilung der Einzelbausteine

hergestellt werden, die auch in ihren anwendungstechnischen Eigenschaften verschieden sein können. Unterschiedliche anwendungstechnische Eigenschaften kann man besonders einfach durch eine verschieden weit geführte Kondensation, also durch Produkte mit verschieden hohem Molekulargewicht, erhalten.

Die Polykondensationsreaktion kann sowohl mit den üblichen Veresterungs- bzw. Umesterungskatalysatoren durchgeführt werden, wie auch ganz ohne solche Katalysatoren. Beides kann im Einzelfall seine besonderen Vorteile haben, und man erhält auch je nachdem bei sonst gleicher Reaktionsführung andersartige Produkte, vor allem natürlich hinsichtlich des Molekulargewichts und der Löslichkeit. Beispielsweise können als Veresterungs- bzw. als Umesterungskatalysatoren Alkalihydroxide, wie Natrium- oder Kaliumhydroxid oder Alkalialkoholate, wie Natriummethylat oder -äthylat, Erdalkalioxide oder -hydroxide, wie z.B. die entsprechenden Calcium- oder Magnesiumverbindungen sowie ferner auch Zink- oder Cadmiumoxid, Salze von organischen Carbonsäuren, wie Natrium-, Calcium-, Mangan- oder Zinkacetat oder -formiat, organische Titanverbindungen, insbesondere die Titanalkoholate, wie z.B. Titanisopropylat oder Titanbutylat, u.a. verwendet werden. Die anzuwendenden Mengen sind vor allem von der Wirksamkeit des jeweiligen Katalysators abhängig. Die Katalysatormenge wird normalerweise so gering wie möglich gehalten. Wenig geeignet sind saure Katalysatoren, weil sie das bevorzugte Diol Diäthylenglykol in Dioxan verwandeln und damit weitgehend den Kettenbildungsreaktionen entziehen.

Es ist anzunehmen, daß bei manchen phosphonsäureester-/gruppenhaltigen Ausgangskomponenten im Verlaufe der Kondensation Kettenbrüche stattfinden und sich die Bruchstücke zu neuen Verbindungen zusammenschließen. So wird z.B. die Verbindung

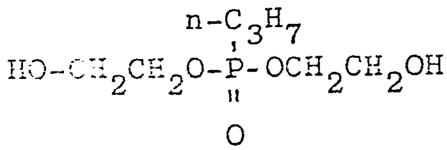

wahrscheinlich nicht vollständig direkt einkondensiert, sondern möglicherweise erst nach einer Umlagerung in

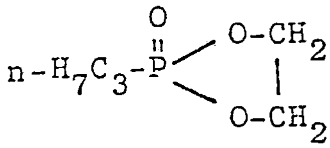

+ $HO-CH_2CH_2-OH$

über eine erneute Ringöffnung durch eine andere Hydroxy-Endgruppe. Es steht auch nicht fest, welcher Anteil der Phosphonsäureester-Gruppen schließlich im Ketten-innern und welcher am Kettenende eingebaut wird. Der relativ niedrige pH-Wert der erfindungsgemäßen Polykondensate könnte für einen hohen Anteil an Phosphonsäurehalbester-Gruppen an den Kettenenden sprechen. Deshalb werden die erhaltenen Polykondensate in wäßriger Lösung, auch zweckmäßig mit Alkalien, wie z.B. Natrium- oder Kaliumhydroxid, oder Ammoniak neutral gestellt.

Die Bestimmung des scheinbaren mittleren Molekulargewichts erfolgt im Dampfdruck-osmometer in Dimethylformamid als Lösungsmittel. Der Meßwert ist ein hinreichend genaues Kriterium zur Charakterisierung der erfindungsgemäßen Polyester. (Die Bestimmung des Molekulargewichts im Dampfdruckosmometer ist beschrieben von S. Kume und H. Kobayashi in Makromol.Chem. 79 (1964), 1 bis 7).

Die erfindungsgemäßen Polyester eignen sich für viele Verwendungszwecke, z.B. als wasserlösliche Klebmassen, als Schlichtemittel, als Haarfestiger, vor allem aber als Egalisier- und Dispergiermittel beim Färben von Synthesefasern, insbesondere von Polyesterfasern und Polyestermischgeweben mit Zellwolle und Wolle nach dem Ausziehverfahren.

Gegenüber sulfogruppenhaltigen Polyestern sind die erfindungsgemäßen Polyester wirtschaftlicher herzustellen, da die phosphonsäurehaltigen Ausgangsmaterialien preisgünstiger und einfacher herzustellen sind, als die bisher gebräuchlichen Sulfonmonomeren, wie z.B. Sulfopropoxyisophthalsäuredimethylester.

Die erfindungsgemäßen Polyester bieten eine bisher unbekannte Möglichkeit, die Eigenschaften wasserlöslicher Polyester zu modifizieren und erlauben damit die Herstellung von Produkten mit völlig neuen Eigenschaften.

Die Wirksamkeit der erfindungsgemäßen Polyester als Egalisierhilfsmittel zum gleichmäßigen Färben von Synthesefasern oder deren Mischungen mit natürlichen Fasern mit Dispersionsfarbstoffen läßt sich weiter verbessern, wenn eine Verbindung der allgemeinen Formel

$$R^8\text{-O-}(CH_2CH_2O)_v\text{-}CH_2CH_2OH \qquad \text{XXII}$$

wobei $R^8$ einen aliphatischen, aromatischen oder araliphatischen Rest mit 6 bis 22 C-Atomen, den Ricinusölrest, die Gruppierung $R^9\text{-COO-}CH_2CH_2CH_2CH_2\text{-}$ oder $R^9\text{-CO-}$, wobei $R^9$ ein aliphatischer, aromatischer oder araliphatischer Rest mit 6 bis 22 C-Atomen ist und v eine Zahl von 4 bis 49 bedeuten, dem erfindungsgemäßen Polyester a) im Gewichtsverhältnis 1 : (0,1 bis 5), vorzugsweise 1 :(0,5 bis 2) zugemischt oder b) im Gewichtsverhältnis 1 : (0,2 bis 2) einkondensiert wird.

Die für $R^8$ und $R^9$ stehenden Reste können auch, insbesondere durch Hydroxyl, substituiert sein. Die benötigten Äthoxylierungsprodukte der allgemeinen Formel XXII sind zum Teil als Emulgatoren im Handel und werden in an sich bekannter Weise durch Umsetzung von Verbindungen $R^8OH$ mit 5 bis 50 Molen Äthylenoxid erhalten. Geeignete Ausgangsprodukte für die Umsetzung mit Äthylenoxid sind z.B. n-Hexanol, n-Heptanol,

Isooctanol, Laurylalkohol, Cetylalkohol, Stearylalkohol, Oleylalkohol, Capronsäure, Caprinsäure, Caprylsäure, Laurinsäure, Myristinsäure, Palmitinsäure, Stearinsäure, Arachinsäure, Behensäure, Oleinsäure, Ricinoleinsäure, Linolsäure sowie die Monoester der vorgenannten Säuren mit Butandiol-(1,4), also z.B. 4-Hydroxybutyl-Caproat, 4-Hydroxybutyl-Laurat, 4-Hydroxybutyl-Palmitat, 4-Hydroxybutyl-Stearat, 4-Hydrobutyl-Oleat, 4-Hydroxybutyl-Ricinoleat, 4-Hydroxybutyl-Linolat, ferner Ricinusöl, Phenol Mandelsäure, Salizylsäure, α-Naphthol, β-Naphthol, tert.-Butylphenol, Hexylphenole, Nonylphenole, Isododecylphenol, Tri-tert.-Butylphenol.

Durch einfaches gleichmäßiges Mischen des erfindungsgemäßen Polyesters mit einer Verbindung der allgemeinen Formel XXII im Gewichtsverhältnis 1 : (0,1 bis 5), vorzugsweise 1 : (0,5 bis 2) wird das verbesserte Egalisiermittel gemäß der vorstehenden Möglichkeit a) hergestellt. Nach dem Mischen der Komponenten liegt, sofern der Polyester noch nicht neutralisiert war, ein schwach saurer pH-Wert vor. Es ist dann zweckmäßig, den pH-Wert des Egalisiermittels durch Einrühren einer anorganischen oder organischen Base, wie z.B. Kali- oder Natronlauge oder Ammoniak, auf einen pH-Wert von 6 bis 7 einzustellen. Hierbei werden vorhandene Säuregruppen ganz oder zum Teil in die entsprechenden Salze überführt. Zur Herstellung eines verbesserten Egalisierhilfsmittels gemäß der vorstehenden Möglichkeit b) wird ein erfindungsgemäßer Polyester mit einer Verbindung der allgemeinen Formel XXII bei Temperaturen von 100 bis 300°C, vorzugsweise 150 bis 250°C, zur Umsetzung gebracht, d.h. auf diese Temperatur erhitzt und zusammengeschmolzen. Die Reaktionszeiten betragen 10 Minuten bis 10 Stunden, vorzugsweise 2 bis 5 Stunden. Normalerweise werden die Reaktionskomponenten ohne Anwendung eines Lösungs- oder Verdünnungsmittels zusammengeschmolzen. Die Umsetzung kann bei Normaldruck durchgeführt werden, die Anwendung von Unterdruck ist jedoch zweckmäßig. Vorzugsweise wird die Polykondensation bei einem Druck von ca. 0,5 bis

30 mbar durchgeführt. Die bei der Umsetzung entstehenden flüchtigen Produkte werden abdestilliert. Zweckmäßigerweise wird die Reaktionsmischung während der Umsetzung gerührt.

Die Umsetzung zwischen dem Polyester und der Äthoxylierungskomponente erfolgt gewöhnlich in Anwesenheit eines der bereits genannten Veresterungs- bzw. Umesterungskatalysatoren. Die Polykondensation kann aber (meist bei einer Verlängerung der Reaktionszeit) auch ganz ohne Katalysator durchgeführt werden.

Die durch Umsetzung des Polyesters und der Verbindung XII erhaltenen Polykondensate stellen zähe Schmelzen dar, die, mit Wasser verdünnt, klare bis opaliszierende viskose Lösungen bzw. Dispersionen liefern. Bei der Verdünnung mit Wasser kann man sowohl die Schmelze in Wasser als auch Wasser in das Polykondensat einrühren. Die wäßrigen Lösungen des Polykondensats zeigen im allgemeinen einen schwach sauren pH-Wert. Es ist zweckmäßig, die wäßrigen Lösungen durch Einrühren einer anorganischen oder organischen Base, wie z.B. Natron- oder Kalilauge oder Ammoniak auf pH-Werte von 6 bis 7 einzustellen.

Die erfindungsgemäßen Polyester und insbesondere ihre Mischungen mit einer Verbindung der allgemeinen Formel XXII und insbesondere ihre Kondensationsprodukte mit einer Verbindung der allgemeinen Formel XXII sind hervorragend als Egalisierhilfsmittel beim Färben von Materialien aus Synthesefasern oder deren Mischungen mit natürlichen Fasern mit Dispersionsfarbstoffen geeignet. Bei dem Verfahren zum gleichmäßigen Färben von Materialien aus Synthesefasern und deren Mischungen mit natürlichen Fasern mit wasserunlöslichen Dispersionsfarbstoffen nach der Ausziehmethode wird den wäßrigen Färbebädern neben den Dispersionsfarbstoffen und pH regulierenden Substanzen als Egalisiermittel noch ein erfindungsgemäßer Polyester und vorzugsweise zusätzlich noch eine Verbindung der

allgemeinen Formel XXII im Gewichtsverhältnis erfindungsgemäßer Polyester Verbindung XXII = 1 : (0,1 bis 5), vorzugsweise 1 : (0,5 bis 2), oder ein Gemisch eines erfindungsgemäßen Polyesters mit einer Verbindung der allgemeinen Formel XXII in dem vorgenannten Mengenverhältnis oder vorzugsweise ein erfindungsgemäßer Polyester, der eine Verbindung der allgemeinen Formel XXII einkondensiert enthält, zweckmäßigerweise in Form einer wäßrigen Lösung in Mengen von 0,02 bis 5 g/l (bezogen auf 100 %iges Produkt), vorzugsweise 0,2 bis 2 g/l, zugesetzt und die Färbung im übrigen in bekannter Weise durchgeführt. Es wird eine hohe Stabilität der Färbeflotten erreicht, und es werden völlig egale Färbungen mit hoher Farbstoffausbeute erhalten. Auch bei schwierig zu färbenden Waren, wie Wickelkörper, oder schwierig zu färbenden Farbstoffen werden hervorragende Ergebnisse erhalten. Besonders gute Ergebnisse erhält man bei Schnellfärbeverfahren. Bei derartigen Schnellfärbeverfahren werden der zu färbenden Ware bei Temperaturen von ca. 130°C plötzlich verhältnismäßig große Farbstoffmengen angeboten. Die dadurch entstehende Gefahr von Unegalitäten wird durch die Anwendung des erfindungsgemäßen Polyesters, vorzugsweise eines Gemischs des Polyesters, mit einer Verbindung der allgemeinen Formel XXII oder vorzugsweise eines erfindungsgemäßen Polyesters mit einkondensierter Verbindung der allgemeinen Formel XXII vermieden.

Zur Durchführung des Färbeverfahrens werden die Färbebäder wie üblich bei 50 bis 60°C angesetzt und durch pH regulierende Substanzen auf pH 4 bis 6 eingestellt. Dann wird der erfindungsgemäße Polyester, vorzugsweise ein Gemisch des Polyesters, mit einer Verbindung der allgemeinen Formel XXII oder vorzugsweise ein erfindungsgemäßer Polyester mit einkondensierter Verbindung der allgemeinen Formel XXII zweckmäßigerweise in Form einer Lösung in Mengen von 0,02 bis 5 g/l, vorzugsweise 0,2 bis 2 g/l (bezogen auf 100 %iges Polykondensat) zugesetzt. Anschließend wird der vordisper-

gierte, wasserunlösliche Dispersionfarbstoff und das zu färbende Material zugegeben und auf die erforderliche Färbetemperatur aufgeheizt und die übliche Färbezeit lang gefärbt. Die Fertigstellung der Färbungen erfolgt in bekannter Weise, z.B. durch reduktive Nachbehandlung.

Bei Schnellfärbeverfahren wird die Flotte getrennt von dem zu färbenden Material unter Zusatz des erfindungsgemäßen Polyesters, vorzugsweise eines Gemisches des Polyesters, mit einer Verbindung der allgemeinen Formel XXII oder vorzugszweise eines erfindungsgemäßen Polyesters mit einkondensierter Verbindung der allgemeinen Formel XXII hergestellt. Die auf die Färbetemperatur von 120 bis 130°C erhitzte Flotte wird dann rasch in Kontakt mit dem zu färbenden Material gebracht. Falls nach der sogenannten Einschleustechnik gearbeitet wird, kann das erfindungsgemäße Polykondensationsprodukt auch dem Färbebad vor der Zugabe der Farbstoffdispersion zugegeben werden.

Bei der Anwendung der erfindungsgemäßen Zusätze kann auch der Einsatz in anderen Lösungsmitteln erfolgen oder zweckmäßig sein, vor allem ein teilweiser Zusatz von anderen Lösungsmitteln, vorzugsweise von Alkoholen, wie Methanol, Äthanol oder Isopropanol, oder auch dipolar aprotischen Lösungsmitteln, wie Dimethylformamid oder Dimethylsulfoxid.

Die im Rahmen der vorliegenden Erfindung auch in Verbindung mit der Bezeichnung araliphatisch benutzte Bezeichnung aliphatisch steht insbesondere für Alkenyl- bzw. Alkenylen-, vor allem aber für Alkyl- bzw. Alkylenreste. Cycloaliphatische Reste sind insbesondere Cycloalkyl- bzw. Cycloalkylenreste. Aromatische Reste, auch in Verbindung mit der Bezeichnung araliphatisch, sind insbesondere solche, die einen sich vom Benzol oder Naphthalin ableitenden Rest enthalten.

Beispiele:

Verwendete Abkürzungen:

AEO = Äthylenoxid,
MEG = Monoäthylenglykol,
DEG = Diäthylenglykol,
TEG = Triäthylenglykol,
PEG = Polyäthylenglykol,
DPG = Dipropylenglykol,
Hex-1,6 = Hexandiol-1,6,
IPA = Isophthalsäure,
ADS = Adipinsäure,
DMT = Terephthalsäuredimethylester,
Naph-1,4 = Naphthalin-1,4-dicarbonsäure,
BA = Bernsteinsäureanhydrid,
MA = Maleinsäureanhydrid,
MG = (scheinbares) mittleres Molekulargewicht,
Propylphospholan = 2-n-Propyl-2-oxo-1,3,2-dioxa-phospholan,
Tem-peraturangaben erfolgen in °Celsius, Prozentangaben sind Gewichtsprozente, sofern nichts anderes angegeben.

Beispiel 1:

20 Mol% n-Propanphosphonsäure-bis-(β-hydroxyäthylester); 80 Mol% DEG; 10 Mol% PEG 600; 50 Mol% IPA; 50 Mol% DMT; Ansatz 1,5 Mol.

In einem 2-Liter-Schliffvierhalskolben mit Rührer, Thermometer, Gaseinleitungsrohr und absteigendem Kühler werden 63,6 g Propanphosphonsäure-bis-(β-hydroxyäthylester), 127,2 g Diäthylenglykol, 90 g Polyäthylenglykol 600 und 145,5 g Terephthalsäuredimethylester zusammen mit 3 g Titantetrapropylat als Katalysator unter Stickstoff im Laufe einer Stunde unter Rühren auf 150°C geheizt. Die Temperatur wird dann stündlich um 10°C bis auf 200°C erhöht. Anfangs sublimiert etwas DMT in die kühleren oberen Wandungen des Glaskolbens. Aber schon bei ca. 170°C wird dieses Sublimat wieder in den Glaskolben zurückgespült und allmählich einkondensiert. Ca. 22 g Methanoldestillat werden in der Vorlage aufgefangen.

Nun werden 124,5 g Isophthalsäure von mindestens 99 %iger Reinheit (unter Stickstoff) bei 200°C eingerührt. Dann wird die Reaktionstemperatur unter gutem Rühren wieder stündlich um weitere 10°C erhöht bis auf 240°C. Anschließend wird noch 2 Stunden unter einem Vakuum von ca. 20 mbar und schließlich noch eine Stunde in einem Vakuum von 1 mbar bei 240 - 245°C geheizt. In dieser zweiten Heizungsphase werden nochmals etwa 55 g Destillat aufgefangen, überwiegend Wasser und überschüssiges Diäthylenglykol bzw. Äthylenglykol.

Man erhält 442 g helle Schmelze vom MG 1780, die noch warm mit Wasser und ca. 18 g 27 %iger Natronlauge auf 2210 g (= 20 %ig) verdünnt und neutralisiert wird. Die helle Lösung kann gegebenenfalls durch Verrühren mit 1 - 2 % Kieselgur und Abpressen über ein Druckfilter von Trübungen restlos befreit werden. Diese Lösung eignet sich hervorragend als Egalisierhilfsmittel für Schnellfärbemethoden in der Polyesterfärberei.

Polyesterlösungen mit ähnlich guten Eigenschaften werden erhalten, wenn man anstelle von Propanphosphonsäure-bis-(β-hydroxyäthylester) die homologen Methan-, Äthan- oder n-Butan-phosphonsäure-ester in aliquoter Menge eingesetzt.

<u>Beispiel 2:</u>

25 Mol% n-Propanphosphonsäure; 30 Mol% DMT; 35 Mol% IPA; 20 Mol% β-Hydroxyäthoxy-benzoesäure; 90 Mol% DEG; 10 Mol% PEG 1000; Ansatz 1,5 Mol.

In der gleichen Apparatur, wie im Beispiel 1 beschrieben, werden 47,93 g n-Propanphosphonsäure 97 %ig, 143,1 g Diäthylenglykol, 150 g Polypropylenglykol 1000 und 87,3 g Terephthalsäuredimethylester (ohne Zusatz eines speziellen Katalysators) im Laufe einer Stunde unter Stickstoff auf 150°C geheizt. Diese Temperatur wird stündlich um 10°C erhöht. Bei 200°C werden 87,15 g Isophthalsäure und 54,6 g p-Hydroxyäthoxy-benzoesäure nachgesetzt und weiter im Stickstoffstrom die Temperatur stündlich um 10°C erhöht bis auf

$240^oC$. Ca. 120 g Destillat werden dabei insgesamt aufgefangen. Man rührt noch 3 Stunden bei einem Vakuum von ca. 20 mbar und weitere 2 Stunden (ebenfalls bei $240^oC$) in einem Vakuum von 1 - 3 mbar und erhält dann als Ausbeute 452 g einer hellen Schmelze vom MG 1620. Mit 1780 g Wasser und 28 g 27 %iger Natronlauge wird sie noch warm auf 2260 g (entsprechend einer 20 %igen Lösung) verdünnt und gleichzeitig neutralisiert. Eine leichte Trübung läßt sich durch Verrühren mit 1 - 2 % Celite J 2 und Abpressen über ein Druckfilter leicht beseitigen. Diese Lösung eignet sich hervorragend als Egalisierhilfsmittel für Schnellfärbemethoden in der Polyesterfärberei.

Beispiel 3:

Ein ähnlich gutes Egalisierhilfsmittel wie in Beispiel 2 erhält man durch analoge Polykondensation von 20 Mol% Äthanphosphonsäure, 40 Mol% DMT; 40 Mol% IPA; 100 Mol% DEG und 10 Mol% PEG 600, MG 1640.

Beispiel 4:

Ein ähnlich gutes Egalisierhilfsmittel wie in Beispiel 2 erhält man auch durch analoge Polykondensation von 20 Mol% Methanphosphonsäure, 80 Mol% Cyclohexan-1,4-dicarbonsäure, 100 Mol% DPG und 5 Mol% PEG 3000, MG 1710.

Beispiel 5

20 Mol% n-Propanphosphonsäure-dimethylester; 80 Mol% IPA; 100 Mol% DEG; 10 Mol% PEG 600. Ansatz 1,5 Mol.

In der gleichen Versuchsapparatur, wie in Beispiel 1 beschrieben, werden 159 g Diäthylenglykol, 90 g Polyäthylenglykol 600, 199,2 g reine Isophthalsäure und 45,6 g n-Propanphosphonsäure-dimethylester mit 2 g Titantetrabutylat als Katalysator unter Rühren im Laufe einer Stunde unter Stickstoff auf $160^oC$ geheizt. Im Laufe von 8 Stunden wird dann die Reaktionstemperatur gleichmäßig bis auf $240^oC$ gesteigert, wobei Wasser und Methanol abdestillieren. An-

... / ...

schließend wird 2 Stunden ein Wasserstrahlvakuum von ca. 20 mbar angelegt und weitere 2 Stunden ein Vakuum von 1 bis 3 mbar. Man erhält 396 g einer hellen Schmelze vom MG 2060, die mit Wasser und ca. 17 g 27%iger Natronlauge auf 1980 g verdünnt und gleichzeitig neutralisiert wird. Eine meist noch vorhandene Trübung läßt sich durch Verrühren mit 1 bis 2 % Kieselgur und Abdrücken über eine Filterpresse restlos beseitigen. Man erhält eine klare, nur schwach gelblich verfärbte 20%ige Lösung, die sich hervorragend als Egalisierhilfsmittel zum Färben von Polyester/Wolle mit Dispersionsfarbstoffen eignet.

Man erhält praktisch gleich gute Ergebnisse, wenn man anstelle von n-Propanphosphonsäure-dimethylester in äquivalenter Menge den Diäthylester, den Di-n-propylester oder den Di-n-butylester eingesetzt.

Beispiel 6:
20 Mol% "Propylphospholan"; 90 Mol% IPA; 100 Mol% DEG. Ansatz 1,5 Mol.

In der gleichen Glasapparatur, wie in Beispiel 1 beschrieben, werden 45 g **2-n-Propyl-2-oxo-1,3,2-dioxa-phospholan**, 159 g Diäthylenglykol, 224,1 g Isophthalsäure und 3 g Titantetraisopropylat im Laufe einer Stunde auf 160°C geheizt, wobei wieder ein stetiger, schwacher Stickstoffstrom durch die Apparatur geleitet wird. Die Temperatur der Schmelze wird dann stündlich um 10°C bis auf 220°C gesteigert und 4 Stunden bei 220 bis 225°C belassen. Wichtig ist auch hier eine ständige, gute Durchmischung der Schmelze mittels eines kräftigen Rührwerks. Zum Schluß wird noch 3 Stunden bei 220 bis 225°C ein Wasserstrahlvakuum von 20 mbar angelegt, dann für 2 Stunden ein Feinvakuum von 1 bis 3 mbar. Man erhält 353 g helle Schmelze vom MG 2390, die sich mit 1397 g Wasser und 15 g 27%iger Natronlauge leicht zu 1765 g einer weißen, neutralen Emulsion verdünnen lassen. Das Produkt zeigt eine ausgezeichnete Egalisierwirkung

beim Färben von Polyesterfasern mit Dispersionsfarbstoffen.

Beispiel 7:

Ein ähnlich gutes Produkt wie in Beispiel 6, das aber klar wasserlöslich ist, erhält man, wenn man anstelle von 100 Mol% DEG nur 90 Mol% DEG einsetzt, daneben noch 10 Mol% PEG 600. Das MG dieses Produkts beträgt 2040.

Beispiel 8:

30 Mol% Dekanphosphonsäure-methylhydroxyäthylester; 40 Mol% DMT; 45 Mol% IPA; 75 Mol% DEG; 20 Mol% PEG 300. Ansatz 0,5 Mol.

In einem Liter-Schliffvierhalskolben mit gleicher Ausstattung, wie in Beispiel 1 beschrieben, werden 39,75 g Diäthylenglykol, 38,8 g Terephthalsäuredimethylester, 30 g Polyäthylenglykol 300, 42 g Dekanphosphonsäure-methylhydroxiäthylester

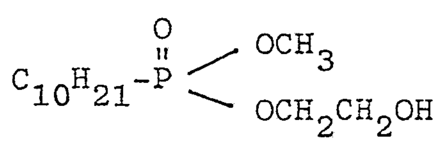

und 1 g Titantetraisopropylat unter Überleiten eines mäßigen Stickstoffstroms im Laufe einer Stunde bei gutem Rühren auf 150°C geheizt. Im Laufe zweier weiterer Stunden wird die Temperatur bis 190°C gesteigert und im Laufe einer Stunde weiter bis 200°C. Dann werden 37,35 g Isophthalsäure (von mindestens 99 %iger Reinheit) in die heiße Schmelze eingetragen und die Temperatur im Laufe zweier Stunden weiter bis 220°C gesteigert. 4 Stunden wird anschließend bei 220 bis 225°C weitergerührt, weitere 4 Stunden bei der gleichen Temperatur unter einem Vakuum von 20 mbar und schließlich nochmals 4 Stunden unter einem Vakuum von 1 bis 3 mbar. Methanol und Wasser destillieren während der Kondensationsreaktion ab, und man erhält als Rückstand 146 g einer hellen Schmelze von MG 1460, die sich leicht mit 576 g Wasser und 8 g 27%iger Natronlauge

auf 730 g zu einer hellen 20 %igen Lösung verdünnen und neutralisieren lassen. Eine geringe weißliche, pulvrige Trübung läßt sich gut durch Verrühren mit 1 bis 2 % Perlite Filtermittel und Abpressen überein Druckfilter beseitigen.

Beispiel 8a:
Praktisch das gleiche Produkt wie in Beispiel 8 erhält man bei Verwendung der aliquoten Menge 2-n-Decyl-2-oxo-1,3,2-dioxaphospholan anstelle von Dekanphosphonsäure-monomethyl-mono-hydroxyäthylester.

In analoger Weise lassen sich auch erfindungsgemäße Polyester der folgenden prozentualen Zusammensetzung herstellen:

Beispiel 8b:
15 Mol% n-Propyl-2-oxo-1,3,2-dioxa-phospholan; 15 Mol% 2-Hexadecyl-2-oxo-1,3,2-dioxaphospholan;40 Mol% DMT; 45 Mol% IPA; 85 Mol% DEG; 10 Mol% PEG 400.

Beispiel 8c:
15 Mol% 2-Methyl-2-oxo-1,3,2-dioxa-4-methyl-phospholan;
15 Mol% 2-Octadecen-(9)-yl-2-oxo-1,3,2-dioxa-phospholan;
40 Mol% DMT; 45 Mol% IPA; 10 Mol% PEG 400; 85 Mol% DEG.

Beispiel 8d:
15 Mol% 2-n-Propyl-2-oxo-1,3,2-dioxa-4-äthyl-phospholan;15 Mol% Octadecyl-phosphonsäure-mono-methyl-mono-hydroxyäthylester; 40 Mol% DMT; 45 Mol% Bernsteinsäureanhydrid; 75 Mol% DEG; 20 Mol% PEG 300.

Beispiel 8e:
wie Beispiel 8d, aber anstelle von 45 Mol% BA nur 25 Mol% BA und dafür noch 20 Mol% MA.

Beispiel 9:
20 Mol% Phenylmethan-phosphonsäure-diäthylester; 20 Mol% ADS; 20 Mol% Naph-1,4; 60 Mol% DEG; 40 Mol% MEG; 30 Mol% TEG

Ansatz 0,5 Mol.

In einem Liter-Schliffvierhalskolben mit der gleichen Ausstattung, wie in Beispiel 1 beschrieben, werden 12,4 g Monoäthylenglykol, 31,8 g Diäthylenglykol, 22,5 g Triäthylenglykol, 21,6 g Naphthalindicarbonsäure-1,4, 43,8 g Adipinsäure und 22,8 g Benzylphosphonsäure-diäthylester mit 1 g Titantetraisopropylat als Katalysator auf 150°C geheizt. Unter gutem Rühren bei ständigem Überleiten eines leichten Stickstoffstroms, der den Transport von Äthanol und Wasser erleichtert, wird die Reaktionstemperatur im Laufe von 6 Stunden bis 220°C erhöht, bei welcher Temperatur noch 4 Stunden lang weiterkondensiert wird. Man legt dann noch bei 220 bis 225°C ein Vakuum von 10 bis 30 mbar für weitere 4 Stunden an, zum Schluß für die Dauer von 2 Stunden ein Feinvakuum von ca. 1 mbar. Man erhält 118 g hellen Schmelzrückstand von MG 1680, der sich leicht mit Wasser und 7 g 27%iger Natronlauge auf 590 g zu einer 20 %igen neutralen Lösung verdünnen läßt. Eine geringe pulvrige Trübung wird durch halbstündiges Verrühren mit 12 g Kieselgur (= ca. 2 %) bei Raumtemperatur und anschließende Druckfiltration beseitigt.

Anstelle von 20 Mol% Phenylmethan-phosphonsäure-diäthylester kann man, ohne die Eigenschaften des Polykondensats wesentlich zu verändern, auch eine aliquote Menge von Benzolphosphonsäure-dimethylester oder Cyclohexan-phosphonsäure-dimethylester verwenden.

Einen ähnlichen wasserlöslichen Polyester erhält man auch, wenn man in Beispiel 9 anstelle von 12,4 g Mono-äthylenglykol eine aliquote Menge Propandiol-1,3, Hexandiol-1,6 oder 2,2'-Dimethylpropandiol-1,3 einsetzt.

Beispiel 10:

10 Mol% Hoe T 2710; 90 Mol% DEG;
10 Mol% PEG 600;52,5 Mol% IPA;47,5 Mol% DMT. Ansatz 1,5 Mol.

In der gleichen Versuchsapparatur, wie in Beispiel 1 beschrieben, werden 143,1 g Diäthylenglykol, 90 g Polyäthylenglykol 600,138,2g Terephthalsäuredimethylester mit 2 g Titantetraisopropylat als Katalysator im Laufe einer Stunde auf 150°C geheizt, dann im Laufe einer Stunde auf 160°C. Ca. 27 g Methanol destillieren im Stickstoffstrom ab. Nun werden 70 g Hoe T 2710 (Handelsprodukt der Hoechst AG, Frankfurt/Main), Kondensationsprodukt aus 1 Mol n-Propanphosphonsäure, 2 Mol n-Propanphosphonsäureanhydrid und 5,5 Mol Äthylenoxyd der ungefähren Formel

$$HO-(CH_2CH_2O-\underset{\underset{O}{\|}}{\overset{\overset{n-C_3H_7}{|}}{P}}-O)_{2-3}CH_2CH_2OH$$

eingetragen
und die Temperatur im Laufe von 2 Stunden auf 180°C gesteigert. Dann werden 130,7 g Isophthalsäure eingetragen und die Temperatur im Reaktionskolben im Laufe von 4 Stunden gleichmäßig weiter erhöht bis auf 220°C. 4 Stunden wird im Stickstoffstrom weiter bei 220 bis 225°C gerührt, dann noch 2 Stunden bei 230 bis 235°C. Bei der letzteren Temperatur legt man dann noch 4 Stunden lang ein Vakuum von ca. 20 mbar und 1 Stunde ein solches von 1 bis 3 mbar an. Man erhält 435g einer hellen Schmelze, die mit Wasser und ca. 39 g 27%iger Natronlauge auf 2175g zu einer 20 %igen, neutralen Lösung verdünnt wird. Eine eventuell noch vorhandene Trübung, kann wie schon beschrieben, durch Behandlung mit 1 bis 2 % Kieselgur leicht beseitigt werden. Das durchschnittliche Molekulargewicht dieses Polykondensats liegt bei 1940.

<u>Beispiel 11</u>:

10 Mol% Hoe T 2710; 90 Mol% DEG; 5 Mol% Pluriol PE 3100;
47,5 Mol% DMT; 52,5 Mol% IPA.
Ansatz = 1,5 Mol.

BAD ORIGINAL

In der Versuchsapparatur von Beispiel 1 werden 143,1g Diäthylenglykol, 82,5 g Pluriol PE 3100 (Hersteller BASF =

Polypropylenglykol 950 + Äthylenoxid bis zu einem MG von 1100), 138,2g DMT und 2 g Titantetraisopropylat im Laufe einer Stunde unter Stickstoff und unter Rühren auf 150°C und im Laufe einer weiteren Stunde bis 160° geheizt. Ca. 27 g Methanol destillieren dabei ab. Nun werden 70 g Hoe T 2710

$$\begin{array}{c} \text{n-}C_3H_7 \\ | \\ HO-(CH_2-CH_2-O-P-O)_{2-3}-CH_2CH_2OH \\ \| \\ O \end{array}$$

eingemischt und im Laufe von 2 Stunden bis 180°C weitergeheizt, bei dieser Temperatur werden noch 130,7 g reine Isophthalsäure zugesetzt. Unter kräftigem Rühren wird dann die Reaktionstemperatur im Laufe von 4 Stunden bis 220°C erhöht und 2 Stunden bei 220 bis 225°C gehalten. Dann wird 2 Stunden auf 230 bis 235°C geheizt, anschließend ein Vakuum von ca. 20 mbar angelegt und 2 Stunden bei diesem Vakuum und bei 230 bis 235°C weiterkondensiert. Zum Schluß wird noch eine Stunde lang bei gleicher Temperatur ein Feinvakuum von ca. 1 mbar angelegt. Man erhält 396 g helle Schmelze vom MG = 1600, die sich mit Wasser und ca. 30 g 27%iger Natronlauge leicht auf 1980 g zu einer hellen, kolloidalen 20%igen Lösung vom pH = 6,5 verdünnen läßt.

Ein verwandtes Produkt erhält man, wenn man anstelle von 82,5 g (= 5 Mol%) Pluriol PE 3100 127,5 g (= 5 Mol%) Pluriol PE 4300 einsetzt (= Polypropylenglykol 1100 + Äthylenoxid bis zu einem MG von 1700).

Beispiel 12:

20 Mol% Dimethylphosphit; 35 Mol% DMT; 45 Mol% IPA; 100 Mol% DEG; 10 Mol% PEG 600.

In der Versuchsapparatur von Beispiel 1 werden 159 g Diäthylenglykol, 90 g Polyäthylenglykol 600, 101,9 g Terephthalsäure-dimethylester und 3 g Titantetraisopropylat unter Stickstoff und unter Rühren im Laufe

einer Stunde auf 150°C geheizt, dann wird die Reaktionstemperatur im Laufe von 3 Stunden bis 180°C gesteigert. Nun werden 112 g Isophthalsäure und 33 g Dimethylphosphit eingerührt und die Temperatur im Verlaufe von 2 Stunden auf 200°C und in 2 weiteren Stunden bis 220°C erhöht. Daraufhin wird 4 Stunden bei 220 - 225°C weiterkondensiert, schließlich die Temperatur im Laufe von 2 Stunden noch bis 240°C gesteigert. Zum Schluß wird noch 2 Stunden bei dieser Temperatur ein Vakuum von ca. 20 mbar angelegt. Man erhält 312 g einer hellen Schmelze vom MG 1750, die zweckmäßig mit Wasser und ca. 30 g 27%iger Natronlauge auf 1560 g verdünnt werden, entsprechend einer 20%igen kolloidalen Lösung vom pH-Wert 7,0. Eine verbleibende Trübung wird gegebenenfalls durch Verrühren mit 1-2 % Kieselgur und Abpressen über ein Druckfilter beseitigt.

Beispiel 13:

20 Mol% phosphongruppenhaltiges Oligoaddukt Hoe T 2710, 45 Mol% DMI; 45 Mol% DMT; 100 Mol% DEG; 10 Mol% PPG 1020. In der Versuchsapparatur von Beispiel 1 werden 159 g Diäthylenglykol, 153 g Polypropylenglykol 1020, 131 g Terephthalsäure-dimethylester, 131 g Isophthalsäure-dimethylester und 3 g Titantetraisopropylat unter Stickstoff im Laufe einer Stunde auf 150°C und im Laufe einer weiteren Stunde auf 160°C geheizt. Nun werden 140,4 g des im Beispiel 10 beschriebenen Oligoadduktes Hoe T 2710 zugesetzt und die Schmelze unter Stickstoff stündlich um 10°C höher geheizt, bis nach 5 Stunden 210°C erreicht sind. Man heizt dann 2 Stunden auf 210 bis 215 °C und weitere 4 Stunden bei der gleichen Temperatur unter einem Vakuum von 10 bis 25 mbar und schließlich noch 2 Stunden bei 210 bis 215°C unter einem Vakuum von ca. 1 mbar. Man erhält 480 g einer hellen Schmelze vom durchschnittlichen MG 1890, die man mit Wasser und ca. 78 g 27%iger Natronlauge auf 2400 g einer 20%igen Lösung vom pH-Wert 7,0 verdünnt. Eine geringe pulvrige weiße Fällung läßt sich wie im Beispiel 12 beschrieben leicht beseitigen.

Beispiel 14:

100 g der 20%igen Lösung des nach Beispiel 10 hergestellten Polyesters und 15 g 100%iges Oxäthylierungsprodukt von Ricinusöl mit 36 Mol Äthylenoxid (Handelsprodukt der HOECHST AG) werden einheitlich verrührt. Man erhält 115 g einer hellen wasserklaren 30%igen Lösung, die sich ganz besonders gut als Egalisierhilfsmittel zum Färben von Polyestergeweben mittels Schnellfärbemethoden eignet. Die Egalisierwirkung dieser Mischung ist bei Verwendung gleicher Gewichtsmengen gegenüber der Wirkung des reinen Polyesters nach Beispiel 10 um 20 - 25 % gesteigert, obwohl das Oxäthylierungsprodukt des Ricinusöls für sich allein nur eine sehr geringe Egalisierwirkung zeigt.

Das gleiche Produkt erhält man auch, wenn man zur wasserfreien Schmelze des Polyesters nach Beispiel 10 (also noch vor dem Verdünnen mit Wasser) die entsprechende Menge des Oxäthylierungsproduktes des Ricinusöls homogen einrührt (am besten bei ca. 120°C) und erst dann mit Wasser zu einer 30 %igen Einstellung verdünnt, sowie mit etwas Natronlauge neutralisiert.

Beispiel 15:

Man erhält ebenfalls Egalisierhilfsmittel mit kräftigen synergistischen Effekten, wenn man eine homogene Mischung herstellt aus 100 g der 20%igen Lösung von Beispiel 10 und

a) 20 g Ricinusöl + 50 AeO
b) 15 g Ricinolsäuremethylester + 15 AeO
c) 20 g Dodecylphenol + 20 AeO
d) 20 g Ölsäure + 10 AeO
e) 10 g Butandiol-1,4-monostearat + 15 AeO.

Beispiel 16:

In 435 g Polyesterschmelze, hergestellt gemäß der Beschreibung in Beispiel 10 wird gleich heiß (bei 200-230°C) unter Stickstoff die gleiche Gewichtsmenge des Anlagerungsproduktes von 36 Mol AEO an 1 Mol Ricinusöl eingerührt, dann

ein Vakuum von ca. 20mbar angelegt und 2 Stunden bei 220 bis 225°C weiterkondensiert. Man erhält ca. 870 g homogenes, helles Cokondensat, das sich leicht mit Wasser und ca. 20 ml 27%iger Natronlauge zu einer fast farblosen neutralen 20%igen Lösung verdünnen läßt. Diese Lösung eignet sich vortrefflich als Egalisierhilfsmittel beim Färben von Polyester/Zellwolle und Polyester/Baumwolle.

In analoger Weise kann man auch die in Beispiel 15 unter a bis e erwähnten Zusätze anstelle von Emulsogen EL in der Arbeitsweise von Beispiel 16 einkondensieren.

Beispiel 17:

Wickelkörper ("Muffs") aus texturierten Polyestergarnen werden auf einem HT-Färbeapparat bei einem Flottenverhältnis von 1 : 10 mit einer Flotte von 130°C durchströmt, die aus weichem Wasser von pH 4,5 (eingestellt mit Essigsäure) und 0,5 g/l eines linearen, wasserlöslichen Polyesters vom Molgewicht 2000 besteht, der gemäß Beispiel 10 hergestellt worden war.

Dieser Flotte wird mittels eines Einschleusgeräts ein mit Wasser von 40°C vordispergiertes Gemisch der folgenden Dispersionsfarbstoffe in handelsüblicher Form rasch zugesetzt: 0,46 % des Farbstoffs der Formel

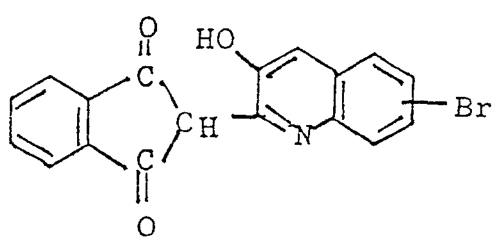

0,52 % des Farbstoffs der Formel

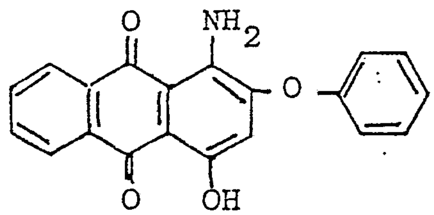

0,17 % des Farbstoffs der Formel (aus gleichen Teilen)

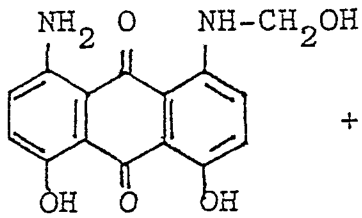

+

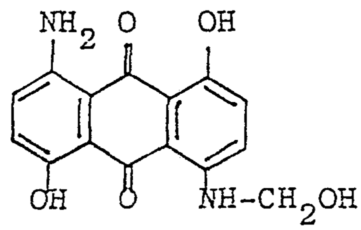

Die Durchström-Menge durch den Muff liegt bei 20 l/kg in der Minute. Nach 30 Minuten Behandlung bei 130°C wird abgekühlt, die Flotte abgelassen und reduktiv gereinigt.

Es resultiert eine vollkommen egale Braunfärbung mit voller Farbstoffausbeute.

Führt man dieselbe Färbung mit den gleichen Farbstoffen unter gleichen Bedingungen durch, jedoch ohne den Zusatz des wasserlöslichen linearen Polyesters, aber unter Verwendung handelsüblicher Dispergier- (auf Basis von Naphthalinsulfosäure/Formaldehyd-Kondensaten) und Egalisierhilfsmitteln (aus Fettsäurepolyglykolester, Polyglykol und oxäthylierten Alkylphenolen), so resultiert eine ungleichmäßige Färbung mit starken Unterschieden in der Farbtiefe und im Farbton des einzelnen Wickelkörpers.

Beispiel 18:

Man verfährt wie in Beispiel 17, jedoch unter Verwendung des linearen wasserlöslichen Polyesters gemäß Beispiel 1. Man färbt 30 Minuten bei 130°C und erhält ebenfalls eine vollkommen egale braune Färbung.

Beispiel 19:
Zur Durchführung der Färbung verfährt man, wie unter Beispiel 17 beschrieben, jedoch unter Verwendung von 0,4 % des Dispersionsfarbstoffs der Formel

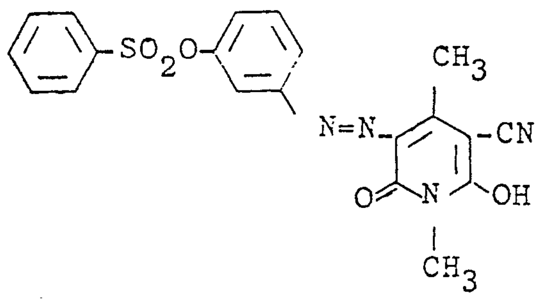

0,32 % des Dispersionsfarbstoffs der Formel

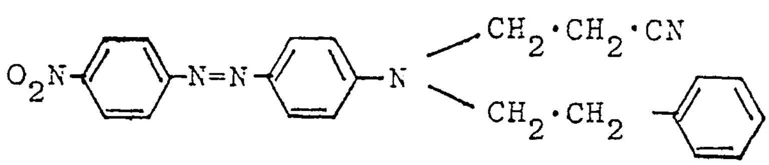

0,26 % des Farbstoffs der Formel

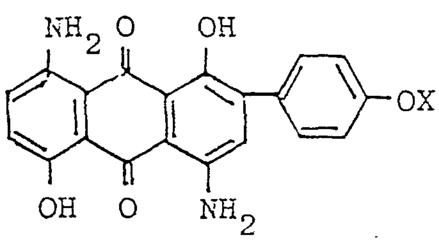

X = 40 % - H, 60 % - $CH_3$

Man färbt 25 Minuten bei 130°C, behandelt reduktiv nach und erhält eine egale Braunfärbung. Ersetzt man bei dieser Färbung den linearen wasserlöslichen Polyester durch handelsübliche Dispergier- und Egalisierhilfsmittel, so resultiert eine unegale Färbung mit starken Farbtiefen- und Farbtonunterschieden.

Beispiel 20:

Bei der Wiederholung des Beispiels 17 wird anstelle des nach Beispiel 10 hergestellten Polyesters ein nach Beispiel 14 hergestelltes Egalisierhilfsmittel eingesetzt. Man erhält ein vergleichbares Ergebnis bereits mit 0,4 g/l des Egalisierhilfsmittels.

Beispiel 21:

Bei der Wiederholung des Beispiels 17 wird anstelle des nach Beispiel 10 hergestellten Polyesters ein nach Beispiel 15e hergestelltes Egalisierhilfsmittel eingesetzt. Man erhält ein vergleichbares Ergebnis bereits mit 0,38 g/l des Egalisierhilfsmittels.

## PATENTANSPRÜCHE

1. In Wasser löslicher oder dispergierbarer Polyester, dadurch gekennzeichnet, daß er Phosphonsäureestergruppen der allgemeinen Formel

```
        R
        ı
- O - P - O -                I
        ॥
        O
```

worin R = Wasserstoff, einen aliphatischen, cycloaliphatischen, aromatischen oder araliphatischen Rest bedeutet, enthält und ein scheinbares mittleres Molekulargewicht von 800 bis 5000 besitzt.

2. Polyester nach Anspruch 1, dadurch gekennzeichnet, daß er ein scheinbares mittleres Molekulargewicht von 1500 bis 3000 besitzt.

3. Polyester nach den Ansprüchen 1 bis 2, dadurch gekennzeichnet, daß R = Wasserstoff, einen aliphatischen Rest mit 1 bis 22 C-Atomen, der auch durch Sauerstoff ein- oder mehrfach unterbrochen sein kann, einen cycloaliphatischen Rest mit 5 bis 8 C-Atomen, Phenyl, Naphthyl, wobei der Phenyl- oder Naphthylrest auch durch bis zu 3 Alkylreste mit je 1 bis 6 C-Atomen substituiert sein kann, einen durch Phenyl substituierten aliphatischen Rest mit 1 bis 12 C-Atomen im aliphatischen Rest, der auch durch Sauerstoff ein- oder mehrfach unterbrochen sein kann, bedeutet.

4. Polyester nach den Ansprüchen 1 bis 3, dadurch gekennzeichnet, daß 2,5 bis 50 %, vorzugsweise 5 bis 30 %, seiner Kettenglieder Phosphonsäureester-Gruppen enthalten.

5. Polyester nach den Ansprüchen 1 bis 4, dadurch gekennzeichnet, daß der Polyester aus Kettengliedern der allgemeinen Formel III

BAD ORIGINAL

$-\overset{O}{\overset{\|}{C}}-R^1-\overset{O}{\overset{\|}{C}}-$ und/oder allgemeinen Formel VII $-\overset{R}{\overset{|}{\underset{O}{\underset{\|}{P}}}}-$

und allgemeinen Formel X $-O-R^4-O$ und/oder allgemeinen Formel XIIIa

$-O-(CHR^5-CHR^6-O)_s-\overset{R}{\overset{|}{\underset{O}{\underset{\|}{P}}}}-(O-CHR^5-CHR^6)_z-O-$ und/oder der allgemeinen

Formel XIVa $-O-(CHR^5-CHR^6-O)_q-\overset{R}{\overset{|}{\underset{O}{\underset{\|}{P}}}}-(OCHR^5-CHR^6O-\overset{R}{\overset{|}{\underset{O}{\underset{\|}{P}}}})-(OCHR^5-CHR^6)_k-O$

und/oder der allgemeinen Formel XVI $-O-R^7-CO-$ und/oder der allgemeinen Formel XIXa

$-O-(CHR^5-CHR^6-O)_s-\overset{R}{\overset{|}{\underset{O}{\underset{\|}{P}}}}-O-$ und/oder der allgemeinen Formel XXa

$-O-(CHR^5-CHR^6-O-\overset{R}{\overset{|}{\underset{O}{\underset{\|}{P}}}}-O)_p$ besteht, worin

$R^1$ eine direkte Bindung oder einen divalenten aliphatischen, cycloaliphatischen aromatischen oder araliphatischen Rest darstellt, dessen Kohlenstoffgerüst auch durch Heteroatome, insbesondere Sauerstoff oder Schwefel, oder Heterogruppen, insbesondere $-SO_2-$, ein- oder mehrfach unterbrochen sein kann, R die in Anspruch 1, vorzugsweise Anspruch 3, angegebene Bedeutung besitzt, $R^4$ einen divalenten aliphatischen, cycloaliphatischen oder araliphatischen Rest, dessen Kohlenstoffgerüst auch durch Sauerstoff und/oder aromatische Kerne, insbesondere Phenylen oder Naphthylen und/oder $-C_6H_5-SO_2-C_6H_5-$ Reste ein- oder mehrfach unterbrochen sein kann, $R^5$, $R^6$ = Wasserstoff, Methyl oder Äthyl, $R^7$ einen divalenten aliphatischen, cycloaliphatischen oder araliphatischen Rest, dessen Kohlenstoffgerüst auch durch Heteroatome, insbesondere Sauerstoff ein- oder mehrfach unterbrochen sein kann, s, z eine Zahl von 1 bis 20, p eine Zahl von 1 bis 10, q, k die Zahl O, 1, 2 oder 3 bedeuten.

6. Verfahren zur Herstellung des Polyesters nach den Ansprüchen 1 bis 5, dadurch gekennzeichnet, daß 100 Mol% zweibasischer, für die Polyesterherstellung geeigneter
a) aromatischer, araliphatischer, cycloaliphatischer und/oder aliphatischer Dicarbonsäuren und/oder ihrer Derivate und/oder
b) aliphatischer, cycloaliphatischer, araliphatischer und/oder aromatischer Phosphonsäuren und/oder ihrer Derivate und 80 bis 140 Mol%, vorzugsweise 80 bis 130 Mol%, für die Polyesterherstellung geeigneter
a) aliphatischer, cycloaliphatischer, araliphatischer Dialkohole, äthergruppenhaltiger aliphatischer oder cycloaliphatischer Dialkohole, wobei die aliphatischen auch noch aromatische Kerne enthalten können, und/oder
b) Di-Ester von Phosphonsäuren und/oder Polyphosphonsäuren mit Dialkoholen, wobei die 180 bis 240 Mol% Ausgangskomponenten 5 bis 100 Mol% , vorzugsweise 10 bis 60 Mol%, Phosphonsäuregruppen und/oder Phosphonsäureestergruppen enthalten, in an sich bekannter Weise bis zu einem scheinbaren mittleren Molekulargewicht von 800 bis 5000, vorzugsweise 1500 bis 3000, kondensiert werden, wobei anstelle von einem Molekül zweibasischer Säure und einem Molekül Dialkohol auch zwei Moleküle Hydroxysäure (C) eingesetzt werden können, wobei als Hydroxysäuren(C)
a) Hydroxycarbonsäuren und/oder ihre Derivate und/oder
b.) Hydroxyphosphonsäuren der allgemeinen Formeln

$$HO-(CHR^5CHR^6-O)_s-\overset{R}{\underset{O}{P}}-OH \quad , \qquad HO-(CHR^5-CHR^6-O-\overset{R}{\underset{O}{P}}-O)_p-H$$

XIX XX

und/oder ihre Derivate, worin R die in den Ansprüchen 1 oder 3 angegebene Bedeutung und $R^5$, $R^6$ s und p die in Anspruch 5 angegebene Bedeutungen besitzen, verwendet werden.

7. Verfahren nach Anspruch 6, dadurch gekennzeichnet, daß als Di-Ester von Phosphonsäuren mit Dialkoholen Verbindungen der Formel

$$HO-(CHR^5-CHR^6-O)_s-\underset{\underset{O}{\|}}{\overset{R}{\overset{|}{P}}}-(OCHR^5-CHR^6)_z-OH \qquad XIII$$

und als Di-Ester von Polyphosphonsäuren mit Dialkoholen Verbindungen der Formel

$$HO-(CHR^5-CHR^6O)_q-\underset{\underset{O}{\|}}{\overset{R}{\overset{|}{P}}}-(O-CHR^5CHR^6O-\underset{\underset{O}{\|}}{\overset{R}{\overset{|}{P}}})_p-(OCHR^5CHR^6)_k-OH \qquad XIV$$

worin R die in den Ansprüchen 1 oder 3 angegebene Bedeutung besitzt und $R^5$, $R^6$ = H, $-CH_3$, $-C_2H_5$; p = 1 bis 10, s und z = 1 bis 20 und q und k = 0,1 oder 3 bedeuten, verwendet werden.

8. Verfahren nach den Ansprüchen 6 bis 7, dadurch gekennzeichnet, daß von den verwendeten Diolen mindestens 50 % der eingesetzten Molmenge aus Vertretern besteht, welche die Gruppierungen $-OCH_2CH_2-(OCH_2CH_2)_r-O-$ oder

$$-O\underset{CH_3}{\underset{|}{C}}HCH_2-(O\underset{CH_3}{\underset{|}{C}}HCH_2)_t-O- \quad \text{oder}$$

$$-(OCH_2CH_2)_w-(O\underset{CH_3}{\underset{|}{C}}HCH_2)_x-(OCH_2CH_2)_y-O- \quad \text{oder}$$

$$-OCH_2CH_2O\underset{CH_3}{\underset{|}{C}}HCH_2-(OCH_2CH_2O\underset{CH_3}{\underset{|}{C}}HCH_2)_u-O-$$

enthalten, wobei r eine Zahl von 1 bis 230, t eine Zahl von 1 bis 175 und u eine Zahl von 1 bis 100 und w, x und y gleich oder größer als 1 und so groß sind, daß die Gruppierung ein Molgewicht von bis zu 10 000 erreicht, bedeuten.

9. Verwendung eines Polyesters nach einem der Ansprüche 1 bis 5 oder eines nach den Ansprüchen 6 bis 8 hergestellten Polyesters als Egalisierhilfsmittels zum Färben von Synthesefasern.

10. Egalisierhilfsmittel, bestehend aus einem Gemisch von einem in Wasser löslichen oder dispergierbaren Polyester nach einem der Ansprüche 1 bis 5 und einer Verbindung der allgemeinen Formel

$R^8$-O-$(CH_2CH_2O)_v$-$CH_2CH_2OH$ XXII

wobei $R^8$ einen aliphatischen, aromatischen oder araliphatischen Rest mit 6 bis 22 C-Atomen, den Ricinusölrest, die Gruppierung $R^9$-COO-$CH_2CH_2CH_2CH_2$- oder $R^9$-CO-, wobei $R^9$ ein aliphatischer, aromatischer oder araliphatischer Rest mit 6 bis 22 C-Atomen ist, und v eine Zahl von 4 bis 49 bedeuten, im Gewichtsverhältnis 1 : (0,1 bis 5), vorzugsweise 1 : (0,5 bis 2), oder hergestellt durch Umsetzung eines Polyesters nach einem der Ansprüche 1 bis 5 und einer Verbindung der allgemeinen Formel

$R^8$-O-$(CH_2CH_2O)_v$-$CH_2CH_2OH$ XXII

wobei $R^8$ einen aliphatischen, aromatischen oder araliphatischen Rest mit 6 bis 22 C-Atomen, den Ricinusölrest, die Gruppierung $R^9$-COO-$CH_2CH_2CH_2CH_2$- oder $R^9$-CO-, wobei $R^9$ ein aliphatischer, aromatischer oder araliphatischer Rest mit 6 bis 22 C-Atomen ist, und v eine Zahl von 4 bis 49 bedeuten, im Gewichtsverhältnis 1 : (0,2 bis 2).

11. Verfahren zum gleichmäßigen Färben von Fasermaterialien aus Synthesefasern und deren Mischungen mit natürlichen Fasern mit Dispersionsfarbstoffen nach der Ausziehmethode, wobei den wäßrigen Färbebädern neben den Farbstoffen pH-regulierende Substanzen und Egalisierhilfsmittel zugesetzt werden, dadurch gekennzeichnet, daß ein Polyester nach einem der Ansprüche 1 bis 5 oder ein Egalisierhilfsmittel nach Anspruch 10 oder 11 in Mengen von 0,02 bis 5 g/l, vorzugsweise von 0,2 bis 2 g/l, zugesetzt wird.

0013564

Europäisches Patentamt

# EUROPÄISCHER RECHERCHENBERICHT

Nummer der Anmeldung
EP 80 10 0065

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. ³) |
|---|---|---|---|
| | CH - A - 380 953 (HOECHST)<br>* Anspruch 1 *<br>-- | 1-8 | C 08 G 63/68<br>D 06 P 1/52 |
| D | DE - A - 2 438 379 (CASSELLA)<br>* Ansprüche 1-32 *<br>---- | 1,9-11 | |

RECHERCHIERTE SACHGEBIETE (Int. Cl. ³)

C 08 G 63/68
D 06 P 1/52

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 21-04-1980 | DECOCKER |